# EUROPÄISCHE PATENTSCHRIFT

(11) **EP 1 997 384 B1**
(45) Veröffentlichungstag und Bekanntmachung des Hinweises auf die Patenterteilung: **24.06.2009**
(21) Anmeldenummer: 07010627.3
(22) Anmeldetag: 29.05.2007
(51) Int. Cl.: A22C 11/02, B02C 18/30

(54) **Temperaturregelung des Massestroms in einer Füllmaschine**
Temperature regulation of the mass flow in a filling machine
Régulation de la température du flux de matière dans une machine de remplissage

(43) Veröffentlichungstag der Anmeldung: 03.12.2008
(73) Patentinhaber: Albert Handtmann Maschinenfabrik GmbH & Co. KG, 88400 Biberach (DE)
(72) Erfinder: Maile, Bernd, 88422 Oggelshausen (DE); Willburger, Peter, 88255 Baindt (DE)
(74) Vertreter: Grünecker, Kinkeldey, Stockmair & Schwanhäusser Anwaltssozietät

(56) Entgegenhaltungen:
- DE-A1- 3 915 409
- DE-A1-8102005 032 67
- DE-B- 1 159 803
- US-A1- 2002 075 754

## Beschreibung

Die Erfindung betrifft ein Verfahren sowie eine Füllmaschine gemäß den Oberbegriffen der Ansprüche 1 und 14.

Ein solches Verfahren sowie eine solche Füllmaschine sind bereits aus der Druckschrift DE-A-102005032678 bekannt. Diese Druckschrift beschreibt eine Temperaturüberwachung, wobei hier der Massestrom mehrere Bereiche einer Füllmaschine passiert und in den mehreren Bereichen der Füllmaschine die Temperatur der Masse gemessen wird. Die Messung dient zur Überwachung und Dokumentation. In Abhängigkeit der gemessenen Temperatur wird der Prozess gestoppt oder eine Anzahl von Portionen ausgeschleust. Die Druckschrift US-A-2002/075754 betrifft einen Mischer, der unterschiedliche pastöse Massen mischt. Dazu gibt es mehrere Sensoren zur Messung der Temperatur und eine Wärmetauscherheizung bzw. Kühlung.

Solche Füllmaschinen zum Befüllen von Wursthülle mit pastöser Masse sind bereits bekannt. Bei der Verarbeitung bestimmter Füllgutsorten, z. B. Rohwurst, ist zu beachten, dass die Temperatur des Füllguts eine bestimmte Temperatur in der gesamten Prozesskette nicht unter- bzw. überschreitet. Wenn das Füllgut eine bestimmte Temperatur unter- bzw. überschreitet, kann es nicht mehr weiter verarbeitet werden. Aus diesem Grund wird bislang die Temperatur des Massestroms erfasst, wobei bei Erreichen eines bestimmten Grenzwertes der Bediener aktiv und manuell in den Prozess eingreifen muss. Bei beheizten Trichtern kann der Eingriff so lange erfolgen, solange sich das Füllgut darin befindet. Evtl. muss die Produktion sogar unterbrochen werden und das Füllgut aus der Maschine entfernt werden, da es nicht mehr weiter verarbeitet werden kann. Das Ausschleusen des Füllguts aus der Maschine, bzw. die Reinigung der Maschine ist jedoch mit hohem Aufwand verbunden und entsprechend kostenintensiv. Bei den bekannten Füllmaschinen muss also vorausschauend gehandelt werden. Somit ist eine erhöhte Aufmerksamkeit des Bedieners erforderlich.

Hiervon ausgehend liegt der vorliegenden Erfindung die Aufgabe zugrunde, auch temperaturempfindliche Füllgutsorten mit minimalem Aufwand prozesssicher zu verarbeiten.

Erfindungsgemäß wird diese Aufgabe durch die Merkmale der Ansprüche 1 und 14 gelöst.

Dadurch, dass die Temperatur der Masse in mehreren Bereichen der Füllmaschine gemessen wird, kann die Temperatur des Massestroms während der gesamten Verweildauer innerhalb der Maschine überwacht, geregelt und optimiert werden. Da manche Bereiche zur Temperaturmessung nur schwer zugänglich sind, kann die Temperatur auch indirekt gemessen werden. Dabei wird dann die Temperatur der von der Masse durchströmten Bauteile gemessen. Somit können Temperatureinflüsse, denen das Füllgut während der Produktion unterliegt, wirkungsvoll kompensiert werden. Das bedeutet, dass auch Temperatureinflüsse, wie Verlustwärme der Füllmaschine, innere Reibung der Masse, die insbesondere im Förderwerk auftritt, oder aber auch der Temperatureinfluss durch die Raumtemperatur gut gehandhabt werden können. Der Bediener muss nicht mehr vorausschauend handeln und darüber hinaus nicht mehr aktiv in den Prozess eingreifen, was das Bedienpersonal erheblich entlastet. Die Prozesssicherheit wird erhöht und darüber hinaus ergeben sich höhere Maschinenleistungen durch weniger Stillstandszeiten.

Gemäß dem erfindungsgemäßen Verfahren kann somit der Massestrom, also der Füllgutstrom, der einen Ansaugbereich, ein Fülltrichter, ein Förderwerk und ein Füllrohr passiert und vom Füllrohr ausgestoßen wird, auf eine bestimmte Temperatur geregelt werden. Das erfindungsgemäße Verfahren kann jedoch ebenfalls für einen Koextrusionsmassestrom verwendet werden.

Vorteilhafter Weise wird die Temperatur zumindest in einem Bereich des Fülltrichters oder des Ansaugbereichs und in oder nach dem Förderwerk gemessen. Der Ansaugbereich bedeutet hier beispielsweise das Saugrohr oder auch einen vorgeschalteten Behälter, wie z. B. Bodentrichter. Somit kann bereits mit Eintritt der Masse in die Füllmaschine die Temperaturregelung erfolgreich beginnen. Wird zusätzlich in oder nach dem Förderwerk die Temperatur gemessen, so werden auch zuverlässig Temperatureinflüsse in Folge innerer Reibung erfasst und können somit gut kompensiert werden. Nach dem Förderwerk bedeutet beispielsweise in Bereichen, die sich dem Förderwerksauslass anschließen, wie beispielsweise Fleischwolf (z. B. Vorsatzwolf) oder Füllrohr.

Gemäß der vorliegenden Erfindung kann die Temperatur jedoch nicht nur in bestimmten Bereichen erfasst werden, sondern auch in einem oder den mehreren Bereichen der Füllmaschine auf eine bestimmte Temperatur, durch eine entsprechende Heiz-/Kühleinrichtung geregelt werden. Somit kann die Solltemperatur des Massestroms in idealer Weise ohne große Schwankungen gehalten werden. Die Prozesssicherheit wird dadurch weiter erhöht. Insbesondere kann die Temperatur der Masse im oder am Trichter und/oder am Förderwerk und/oder an einem Fleischwolf und/oder an dem Füllrohr und/oder im oder am Ansaugbereich mit Hilfe der Heiz-/Kühleinrichtung geregelt werden.

Es ist auch möglich, dass abhängig von den gemessenen Temperaturen in der Füllmaschine die Masse auf eine bestimmte Temperatur eingestellt wird, bevor es in die Füllmaschine geleitet wird, insbesondere bei der Zubereitung der pastösen Masse. Somit kann die Masse bzw. das Füllgut bereits bevor es die Füllmaschine erreicht, eine entsprechend passende Temperatur aufweisen, so dass die Heiz-/Kühleinrichtung der Füllmaschine die Temperatur auf den entsprechenden Sollwert regeln kann. Dies bringt den Vorteil mit sich, dass die Heiz-/Kühleinrichtung direkt in der Füllmaschine eine geringere Maximalleistung aufweisen und kleiner dimensioniert werden kann.

Gemäß der vorliegenden Erfindung kann die Temperaturregelung in den einzelnen Bereichen durch einen gemeinsamen Heiz-/Kühlkreis oder durch mindestens zwei getrennte Heiz-/Kühlkreise erfolgen. Ein gemeinsamer Heiz-/Kühlkreis weist einen einfacheren Aufbau auf. Ein getrennter Heiz-/Kühlkreis, d. h. einzelne Heiz-/Kühlkreise für unterschiedliche Bereiche ermöglichen jedoch eine noch genauere Regelung der Massetemperatur in den unterschiedlichen Bereichen. So kann beispielsweise die Masse im Förderwerk, wo es einer höheren inneren Reibung unterliegt und mehr Verlustwärme durch die Maschine aufnimmt, stärker gekühlt werden als beispielsweise am Füllrohr oder im Trichter.

Es ist möglich, dass die Temperaturregelung vorausschauend in Abhängigkeit der zu erwartenden oder gemessenen Durchflussmenge der Masse erfolgt, wobei die Kühl- bzw. Heizleistung der Kühl-/Heizeinrichtung in Abhängigkeit der Durchflussmenge geregelt wird. Dabei kann die Durchflussmenge gemessen oder aber eingegeben werden. Das bedeutet, dass beispielsweise bei hohen Durchflussmengen bei Beginn des Prozesses die Heiz- bzw. Kühlleistung der Heiz-/Kühleinrichtung zunächst höher eingestellt wird als bei geringen Durchflussmengen, um schon bei Beginn des Prozesses eine ausreichende Temperaturregelung der Masse sicherzustellen. Ebenso ist es möglich, dass die Temperaturregelung vorausschauend in Abhängigkeit von dem zu erwartenden oder gemessenen Massedruck erfolgt, wobei die Kühl- bzw. Heizleistung der Heiz-/Kühleinrichtung in Abhängigkeit des Massedrucks geregelt wird. Der Massedruck ist der Druck der Masse, der in dem Förderwerk erzeugt wird. Bei hohem Massedruck erwärmt sich das Produkt stärker als bei niedrigem Massedruck, was durch eine entsprechende Ansteuerung der Heiz-/Kühleinrichtung kompensiert werden kann. Ebenso ist es möglich, die Temperaturregelung vorausschauend in Abhängigkeit der zu erwartenden bzw. gemessenen Leistungsaufnahme der Füllmaschine durchzuführen, wobei die Kühl- bzw. Heizleistung der Heiz-/Kühleinrichtung in Abhängigkeit der zu erwartenden bzw. gemessenen Leistungsaufnahme geregelt wird.

Wenn bei dem erfindungsgemäßen Verfahren zusätzlich eine Koextrusionseinrichtung vorgesehen ist, und der Massestrom, dessen Temperatur geregelt werden soll, ein Koextrusionsmassestrom ist, wird die Temperatur in einem Bereich einer Koextrusionsmassenzuführung, beispielsweise einem Koextrusionstrichter und/oder in einem Bereich eines Koextrusionsförderwerks und/oder einem Bereich eines Koextrusionskopfes gemessen. Die Temperatur der Masse kann dann auch in mindestens einem dieser Bereiche über eine Heiz-/Kühleinrichtung geregelt werden. Somit kann auch der Massestrom der Koextrusionsmasse prozesssicher, wie zuvor beschrieben, verarbeitet werden.

Die vorliegende Erfindung ermöglicht, dass die Temperaturen zeit- und ortsabhängig dokumentiert werden können. Ein solches Protokoll erhöht die Prozesssicherheit und ermöglicht darüber hinaus den Nachweis, dass entsprechend vorgeschriebene Temperaturen eingehalten wurden.

Eine Füllmaschine gemäß der vorliegenden Erfindung umfasst mehrere Temperatursensoren, die in unterschiedlichen Bereichen der Füllmaschine angeordnet sind, sowie eine Heiz-/Kühleinrichtung zum Heizen oder Kühlen der Masse, sowie eine Regeleinrichtung, die die Temperatur der Masse in Abhängigkeit der gemessenen Temperaturen regelt. Optional kann die Temperatur auch zusätzlich in Abhängigkeit einer zu erwartenden Temperatur geregelt werden. Dabei kann die Heiz-/Kühleinrichtung zumindest teilweise am Fülltrichter und/oder dem Förderwerk und/oder dem Füllrohr und/oder am Ansaugbereich angeordnet sein. Wenn die Füllmaschine weiter einen Vorsatzwolf bzw. einen Fleischwolf umfasst, kann auch hier zumindest teilweise die Heiz-/Kühleinrichtung angeordnet sein. Dies ermöglicht, dass die Temperatur in unterschiedlichen Bereichen geregelt werden kann. Vorteilhafterweise sind die Temperatursensoren zumindest in einem Bereich des Fülltrichters oder des Ansaugbereichs und in oder nach dem Förderwerk angeordnet. Die Heiz-/Kühleinrichtung der Füllmaschine, die an mehreren Bereichen heizt oder kühlt, kann für diese Bereiche einen gemeinsamen Kühl- bzw. Heizkreis aufweisen. Die Heiz-/Kühleinrichtung kann auch mehrere unabhängige Einheiten aufweisen mit getrennten Kühl- bzw. Heizkreisen.

Gemäß einer bevorzugten Ausführungsform umfasst die Vorrichtung eine Koextrusionseintichtung, die mehrere Bereiche, wie eine Koextrusionsmassezuführung, ein Förderwerk sowie einen Koextrusionskopf aufweist, wobei die Temperatursensoren dann in mehreren Bereichen der Koextrusionseinrichtung angeordnet sind. Somit kann auch der Koextrusionsmassestrom exakt, wie zuvor beschrieben, auf eine bestimmte Temperatur geregelt werden, wobei den unterschiedlichen Einflüssen in den unterschiedlichen Bereichen der Koextrusionseinrichtung Rechnung getragen werden kann. Die Heiz-/Kühleinrichtung kann dann auch in mindestens einem Bereich der Koextrusionseinrichtung angeordnet sein.

Weiter umfasst die erfindungsgemäße Füllmaschine vorzugsweise eine Einrichtung zum zeit- und ortsabhängigen Dokumentieren der gemessenen Temperaturen.

Weiter können also gemäß der vorliegenden Erfindung Temperaturen, die in einem bestimmten Bereich oder Bereichen gemessen werden, auch zur Temperaturregelung in einem anderen Bereich oder anderen Bereichen herangezogen werden. Somit ist eine vorausschauende Temperaturregelung möglich, die den unterschiedlichen Temperatureinflüssen in den unterschiedlichen Bereichen Rechnung trägt.

Die vorliegende Erfindung wird nachfolgend unter Bezugnahme folgender Figuren näher erläutert:
Figur 1 zeigt schematisch eine Ausführungsform einer Füllmaschine gemäß der vorliegenden Erfindung.
Figur 2 zeigt schematisch eine Füllmaschine gemäß einem weiteren Ausführungsbeispiel der vorliegenden Erfindung.
Figur 3 zeigt schematisch einen Signalflussplan einer Ausführungsform des erfindungsgemäßen Verfahrens.
Figur 4 zeigt schematisch einen Signalflussplan einer weiteren Ausführungsform des erfindungsgemäßen Verfahrens.
Figur 5 zeigt schematisch eine weitere Ausführungsform gemäß der vorliegenden Erfindung.

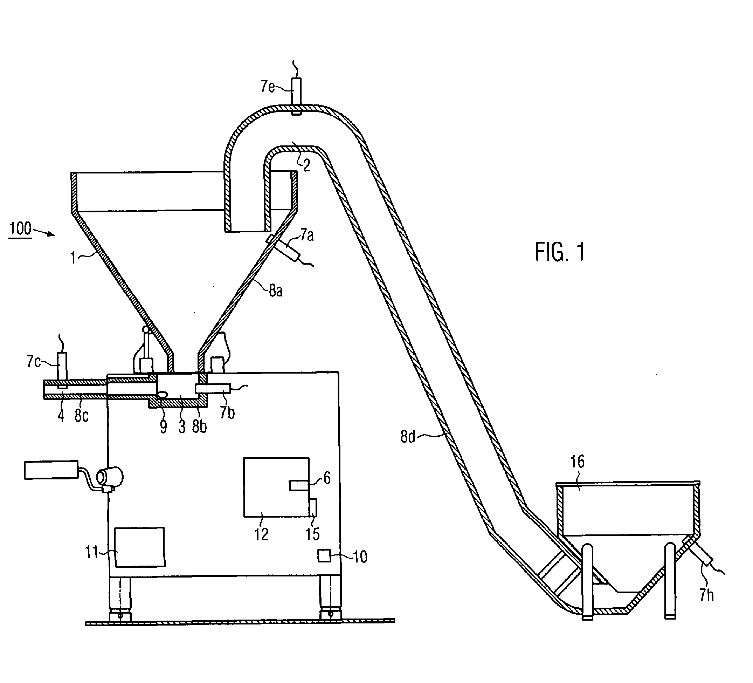

Figur 1 zeigt eine Ausführungsform einer erfindungsgemäßen Füllmaschine 100. Die Füllmaschine 100 umfasst einen Fülltrichter 1, beispielsweise einen Vakuumtrichter, in dem ein Unterdruck erzeugt werden kann. Weiter umfasst die Füllmaschine 100 ein Saugrohr 2, über das die pastöse Masse, nachfolgend auch als Füllgut bezeichnet, in den Fülltrichter 1 zugeführt werden kann. Das Saugrohr 2 ist Teil eines Ansaugbereichs für das Füllgut. Zum Ansaugbereich kann auch ein vorgeschalteter Bodentrichter (16) gehören. Weiter umfasst die Füllmaschine ein Förderwerk 3, das am unteren Ende des konisch zulaufenden Fülltrichters 1 angeordnet ist. Bekannterweise umfasst ein derartiges Förderwerk 3 beispielsweise eine Flügelzellenpumpe oder eine Förderschnecke, die das Füllgut aus dem Fülltrichter 1 in Richtung eines Füllrohrs 4 schiebt, wobei über das Füllrohr 4 das Füllgut in eine Wursthülle geschoben wird.

Die erfindungsgemäße Füllmaschine 100 weist demnach mehrere Bereiche auf, d. h. den zuvor beschriebenen Ansaugbereich 2, den Fülltrichter 1, das Förderwerk 3 und einen dem Förderwerk 3 nachfolgend angeordneten Bereich, wie beispielsweise ein Füllrohr 4.

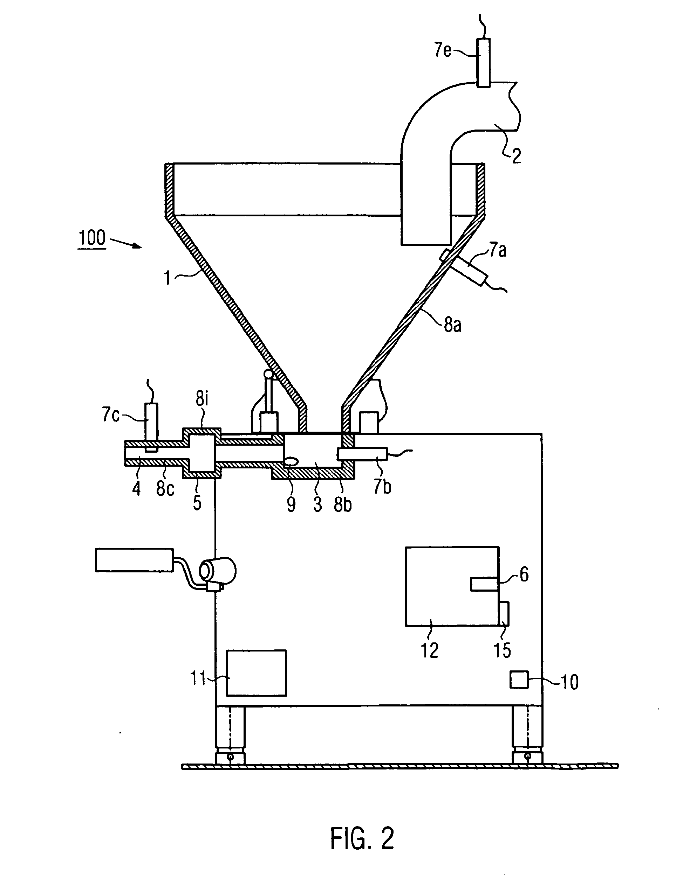

Das in Figur 2 gezeigte Ausführungsbeispiel entspricht dem in Figur 1 gezeigten Ausführungsbeispiel, wobei jedoch am Förderwerksauslass ein Fleischwolf 5 angeordnet ist, und der Ansaugbereich einfachheitshalber nicht weiter dargestellt ist.

Gemäß der vorliegenden Erfindung sind nun in mehreren Bereichen der Füllmaschine 100 Temperatursensoren 7 vorgesehen. In Figur 1 ist beispielsweise ein Temperatursensor 7a im oberen Bereich des Fülltrichters 1 angeordnet, ein weiterer Temperatursensor 7b, der die Temperatur des Füllguts im Förderwerk (3) misst, sowie ein Temperatursensor 7c, der hier die Temperatur des Füllguts im Füllrohr 4 misst.

Wie aus Figur 1 und 2 hervorgeht, könnte alternativ oder zusätzlich die Temperatur auch durch entsprechende Temperatursensoren 7e, 7h im Ansaugbereich 2 des Fülltrichters 1, z. B. im Saugrohr 2 oder im Bodentrichter 16 gemessen werden. Wenn auch nicht dargestellt, könnte die Temperatur ebenfalls im Fleischwolf 5 gemessen werden.

Ferner umfasst die erfindungsgemäße Füllmaschine eine Heiz-/Kühleinrichtung 8, die ermöglicht, dass die Füllguttemperatur auf einen bestimmten Sollwert bzw. Sollwertbereich geregelt werden kann. Die Heiz-/Kühleinrichtung 8 ist in mehreren Bereichen der Füllmaschine 100 angeordnet. Bei dem in Figur 1 gezeigten Ausführungsbeispiel ist ein Teil 8a der Heiz-/Kühleinrichtung um den Fülltrichter 1 herum, d. h. um seine Außenwandung angeordnet. Ein Teil 8b der Heiz-/Kühleinrichtung ist so angeordnet, dass sie das Füllgut im Förderwerk 3 kühlt. Ferner ist ein Teil 8c der Heiz-/Kühleinrichtung am Füllrohr 4 angeordnet, so dass das Füllgut im Füllrohr 4 geheizt oder gekühlt werden kann. Ferner ist eine Heiz-/Kühleinrichtung 8d im Ansaugbereich d. h. um das Saugrohr und/oder den Bodentrichter 16 angeordnet. Vorzugsweise ist die Heiz-/Kühleinrichtung 8 an mindestens zwei Bereichen vorgesehen.

Die Heiz-/Kühleinrichtung 8 ist als Wärmetauscher, z. B. Durchflusswärmetauscher ausgebildet und umfasst dazu weiter ein entsprechendes Heiz-/oder Kühlaggregat 11.

Wenn, wie in Figur 2 dargestellt ist, die Füllmaschine 100 einen Fleischwolf 5 aufweist, kann auch dieser eine entsprechende Heiz-/Kühleinrichtung 8i aufweisen.

Die Füllmaschine 100 umfasst ferner eine Maschinensteuerung 12, die eine Regeleinrichtung 6 umfasst, die die Temperatur des Füllguts in Abhängigkeit der von den Temperatursensoren 7 gemessenen Temperaturen regelt. Ferner umfasst die erfindungsgemäße Füllmaschine eine Einrichtung 10 zum lückenlosen zeit- und ortsabhängigen Dokumentieren der gemessenen Temperaturwerte. Eine solche Einrichtung zum Dokumentieren kann ein Speichermedium und/oder einen entsprechenden Drucker zum Ausdruck der Messprotokolle aufweisen. Bei dem in Figur 1 gezeigten Ausführungsbeispiel heizt bzw. kühlt die Heiz-/Kühleinrichtung 8 das Füllgut in den Bereichen 8a, 8b, 8c, wobei für diese Bereiche ein gemeinsamer Kühl- bzw. Heizkreis vorgesehen ist. Dies bedeutet, dass diese Bereiche auf eine vorbestimmte gemeinsame Temperatur geheizt oder gekühlt werden.

Es ist jedoch auch möglich, dass die Heiz-/Kühleinrichtung mehrere von einander unabhängige Einheiten 8a, b, c aufweist, mit voneinander getrennten Kühl- bzw. Heizkreisen, was eine noch exaktere Anpassung der Temperatur ermöglicht.

Aufgrund der baulichen Gegebenheiten ist die Heiz-/Kühleinrichtung 8d im Bereich des Ansaugbereichs von den Bereichen 8a, b, c getrennt.

Ferner kann die erfindungsgemäße Füllmaschine einen Sensor zur Messung des Füllgutdrucks 9 aufweisen, sowie eine Einrichtung 15 zum Messen der Leistungsaufnahme der Füllmaschine.

Während der Produktion unterliegt das Füllgut verschiedenen Temperatureinflüssen. Diese können sein: Verlustwärme der Füllmaschine, innere Reibung des Füllgutes sowie Temperatureinfluss durch die Raumtemperatur. Bei der Verarbeitung bestimmter Füllgutsorten, z. B. Rohwurst ist jedoch zu beachten, dass die Temperatur des Füllguts eine bestimmte Temperatur in der gesamten Prozesskette nicht überschreiten darf. Bei der Verarbeitung von Käse, der ebenfalls in Wursthüllen abgefüllt wird, darf beispielsweise die Füllguttemperatur eine bestimmte Temperatur nicht unterschreiten. Um dies zu gewährleisten, wird gemäß dem erfindungsgemäßen Verfahren in mehreren Bereichen der Füllmaschine 100 die Temperatur über die Temperatursensoren 7 gemessen. In der Regeleinrichtung 6 wird dann die entsprechende erfasste Temperatur mit einem entsprechenden Sollwert, der vorab in Abhängigkeit des zu verarbeitenden Produkts eingegeben wurde, verglichen. Die Temperatur des Füllguts wird dann in Abhängigkeit der gemessenen Temperatur, d. h. des Soll-/lstwertvergleichs durch die Heiz-/Kühleinrichtung 8 auf eine bestimmte Temperatur geregelt. Dadurch, dass die Füllguttemperatur in mehreren Bereichen gemessen wird und auch ein automatisches Kühlen bzw. Heizen des Füllguts in mehreren Bereichen erfolgt, kann die Temperatur des Massestroms in idealer Weise ohne größere Schwankungen gehalten werden. Durch den integrierten Regelkreis in der Füllmaschine kann die Temperatur des Massestroms während der gesamten Verweildauer innerhalb der Füllmaschine überwacht, geregelt und optimiert werden. Somit können auch temperaturempfindliche Füllgutsorten prozesssicher verarbeitet werden.

Es ist auch möglich, dass die Temperatur des Füllguts in Abhängigkeit der in der Füllmaschine 100 gemessenen Temperaturen eingestellt wird bevor es in die Füllmaschine geleitet wird, insbesondere bei der Zubereitung der pastösen Masse. Dies bringt den Vorteil mit sich, dass das Füllgut, wenn es in den Trichter 1 geleitet wird, schon eine bestimmte, vorab eingestellte, passende Temperatur aufweist, so dass die Heiz-/Kühleinrichtung das Füllgut schnell ohne große Schwankungen auf einen bestimmten Sollwertbereich heizen bzw. kühlen kann. Dazu kann beispielsweise die Regeleinrichtung 6 mit einer Heiz-/Kühleinrichtung verbunden sein, die das Füllgut heizt bzw. kühlt bevor es in die Füllmaschine geleitet wird. Es ist jedoch auch möglich, auf einer nicht dargestellten Anzeige darzustellen, auf welche Temperatur bzw. welchen Temperaturbereich das Füllgut vor dem Zuleiten in die Füllmaschine gebracht werden sollte.

Gemäß der vorliegenden Erfindung ist es auch möglich, die Temperaturregelung vorausschauend in Abhängigkeit von bestimmten Parametern durchzuführen, wobei die Kühl- bzw. Heizleistung der Heiz-/Kühleinrichtung 8 bzw. deren Heiz-/Kühlaggregat 11 in Abhängigkeit dieser Parameter geregelt wird. So kann die Kühl- bzw. Heizleistung der Heiz-/Kühleinrichtung beispielsweise in Abhängigkeit des Füllgutdrucks, der beispielsweise durch einen Druckmesser 9 in der Fördereinrichtung 3 gemessen werden kann, geregelt werden. Bei hohem Füllgutdruck ist eine stärkere Erwärmung des Füllguts durch innere Reibung zu erwarten, so dass beispielsweise die Kühlleistung der Heiz-/Kühleinrichtung 8 relativ hoch sein muss. Der zu erwartende Füllgutdruck kann jedoch auch über eine entsprechende Eingabeeinheit eingegeben werden. Die Kühl-/bzw. Heizleistung der Heiz-/Kühleinrichtung 8 kann auch in Abhängigkeit der Durchflussmenge geregelt werden, wobei diese ebenfalls eingegeben werden kann oder aber gemessen werden kann. Bei hoher Durchflussmenge muss beispielsweise mehr gekühlt werden, als bei niedriger Durchflussmenge, so dass schon bei Beginn des Prozesses die Kühl- bzw. Heizleistung auf einen entsprechenden Wert geregelt wird. Die Temperaturregelung kann auch vorausschauend in Abhängigkeit der zu erwartenden bzw. durch den Sensor 15 gemessenen Leistungsaufnahme der Füllmaschine erfolgen, wobei die Kühl- bzw. Heizleistung der Heiz-/Kühleinrichtung 8 in Abhängigkeit der zu erwartenden bzw. gemessenen Leistungsaufnahme geregelt wird. Bei hoher Maschinenleistung erwärmt sich das Füllgut in höherem Maße, so dass beispielsweise die Kühlleistung hoch sein muss.

Gemäß der vorliegenden Erfindung können also Temperaturen, die in einem bestimmten Bereich oder Bereichen gemessen werden, zur Temperaturregelung in anderen Bereichen herangezogen werden.

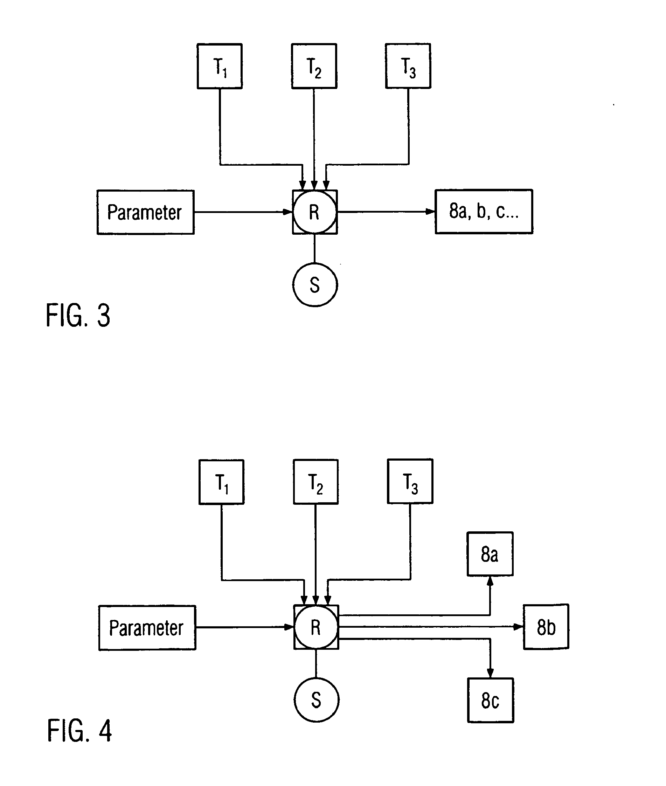

Figur 3 zeigt einen möglichen Signalflussplan für ein erfindungsgemäßes Verfahren. Wie aus Figur 3 hervorgeht, werden die gemessenen Temperaturwerte, hier nur beispielhaft drei Temperaturwerte, an die Regeleinrichtung 6 weitergeleitet. Die gemessenen Temperaturen werden mit entsprechenden Sollwerten S verglichen. Als weitere Regelparameter können wie zuvor erläutert noch die Durchflussmenge und/oder der Füllgutdruck und/oder die Maschinenleistung mit in die Regelung eingehen. Die Regeleinrichtung 6 steuert dann die Heiz-/Kühleinrichtung 8 bzw. deren Heiz-/Kühlaggregat 11 an. Die Kühl- bzw. Heizeinrichtung 8 kühlt bzw. heizt das Füllgut dann auf einen entsprechenden Sollwert bzw. Sollwertbereich. Dazu kann beispielsweise die Temperatur des Wärmetauschermediums, die Durchflussgeschwindigkeit etc. angepasst werden. In Figur 3 gibt es einen gemeinsamen Heiz-/Kühlkreis für die Heiz-/Kühleinrichtung 8 für die unterschiedlichen Bereiche der Füllmaschine 100.

Wie in Figur 4 dargestellt ist, ist es jedoch auch möglich, für die unterschiedlichen Bereiche getrennte Heiz-/Kühlkreise für die unterschiedlichen Einheiten 8a, b, c, d der Heiz-/Kühleinrichtung zu verwenden. Die Temperatur des Füllguts kann dann noch exakter angepasst werden, wobei dann in Bereichen, in denen das Füllgut größeren Temperatureinflüssen ausgesetzt ist, entsprechend mehr oder weniger geheizt oder gekühlt werden kann. Somit können unnötige Temperaturschwankungen verhindert werden. Die Regelung der Füllguttemperatur durch die einzelnen Heiz-/Kühlkreise erfolgt dabei jeweils mindestens abhängig von einer gemessenen Temperatur.

Es können auch mehrere, hier drei voneinander unabhängige Regelkreise zum Regeln der Füllguttemperatur in den unterschiedlichen Bereichen eingesetzt werden. Für die unterschiedlichen Regler gibt es dann auch eigene Sollwerte. Die entsprechenden Einheiten der Heiz-/Kühleinrichtung 8 können dann ebenfalls unterschiedlich angesteuert werden.

Ferner können auch mehrere Einheiten, z. B. 8a, b, c wie in Figur 3 erläutert, einen gemeinsamen Heiz-/Kühlkreis aufweisen, während eine oder mehrere andere Einheiten, z. B. 8d, einen gesonderten Heiz-/Kühlkreis aufweisen, wie in Figur 4 erläutert.

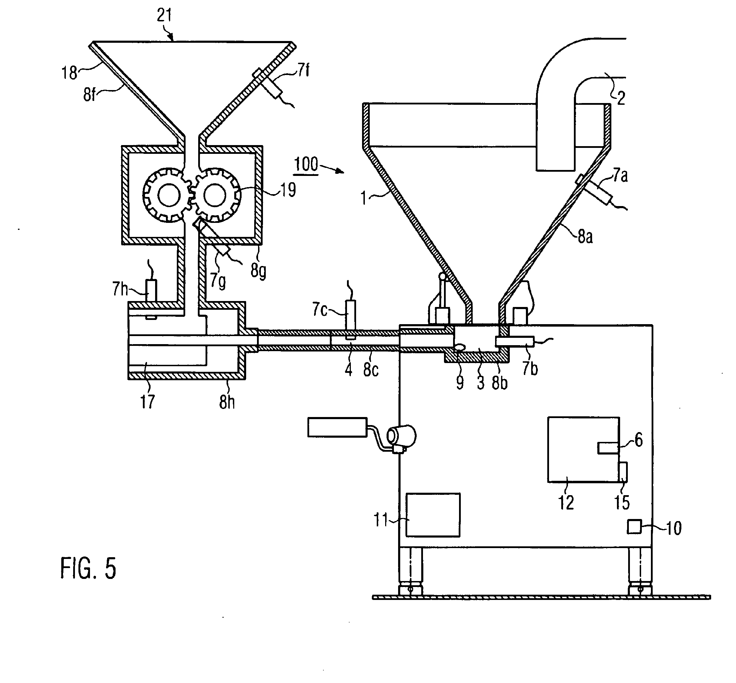

Figur 5 zeigt eine weitere mögliche Ausführungsform gemäß der vorliegenden Erfindung. Wie aus Figur 5 hervorgeht, weist die Füllmaschine noch weiter eine sogenannte Koextrusionseinrichtung 21 auf. Derartige Koextrusionseinrichtungen werden dazu verwendet, um eine pastöse Masse um die vom Füllrohr 4 ausgestoßene pastöse Masse auszustoßen. Auf diese Weise kann beispielsweise eine Wursthülle auf das Füllgut aufgebracht werden, oder aber eine zweite pastöse Masse, d. h. ein zweites Füllgut um das von dem Füllrohr 4 ausgestoßene innere Füllgut aufgebracht werden. Eine solche Koextrusionseinrichtung umfasst in bekannter Weise eine Einrichtung zum Zuführen einer pastösen Masse, nachfolgend Koextrusionsmasse genannt. Hier ist die Einrichtung 18 als Fülltrichter ausgebildet. Ferner umfasst die Koextrusionseinrichtung 21 ein Förderwerk 19, beispielsweise in Form einer Flügelzellenpumpe oder einer Zahnradpumpe. Schließlich umfasst die Koextrusionseinrichgung 21 einen Koextrudierkopf 17 zum Ausstoßen der Koextrusionsmasse. Genau wie für den im Zusammenhang mit Figuren 1 und 2 erläuterten Massestrom wird auch dieser Koextrusionsmassestrom durch die gleichen Parameter wie Außentemperatur, Verlustwärme der Füllmaschine, innere Reibung des Füllguts etc. beeinflusst. Aus diesem Grund weist auch hier die Füllmaschine für diesen Massestrom in mindestens zwei der mehreren Bereiche, d. h. dem Fülltrichter, dem Förderwerk und dem Koextrusionskopf einen oder mehrere Temperatursensoren 7f, g, h auf. Auch weist die Koextrsusionseinrichtung 21 in mindestens einem der unterschiedlichen Bereiche eine entsprechende Heiz-/Kühleinrichtung 8f, g, h auf. Wie im Zusammenhang mit dem ersten Massestrom beschrieben, kann die Füllmaschine in diesen Bereichen getrennte Heiz-/Kühleinrichtungen mit getrennten entsprechenden Heiz-/Kühlkreisen 8f, g, h aufweisen oder aber einen Heiz-/Kühlkreis für mehrere Bereiche. Ansonsten entspricht dieses Ausführungsbeispiel, das den Massestrom der Koextrusionsmasse betrifft, dem Ausführungsbeispiel, das im Zusammenhang mit der Masse, die durch das Füllrohr 4 ausgestoßen wird, beschrieben wurde. Dies betrifft insbesondere auch das in den Figuren 3 und 4 dargestellte Regelverfahren, sowie die vorausschauende Temperaturregelung in Abhängigkeit der zu erwartenden oder gemessenen Leistungsaufnahme der Füllmaschine, oder des im Förderwerk 19 gemessenen Massedrucks oder der zu erwartenden Durchflussmenge der Koextrusionsmasse.

Bei dem in Figur 5 gezeigten Ausführungsbeispiel werden die Temperaturen für den ersten Massestrom und den Koextrusionsmassestrom entkoppelt voneinander auf eine jeweils entsprechende Solltemperatur geregelt. Die Regelung der beiden unterschiedlichen Masseströme könnte jedoch auch in Abhängigkeit voneinander erfolgen.

Gemäß der vorliegenden Erfindung kann gewährleistet werden, dass während des gesamten Füllprozesses die entsprechenden Temperaturgrenzen eingehalten werden können, ohne dass der Bediener manuell eingreifen muss. Somit kann die Prozesssicherheit deutlich erhöht werden. Die Maschinenleistung kann somit durch weniger Stillstandszeiten erhöht werden. Das Bedienpersonal wird entlastet und eine lückenlose Dokumentation ist möglich.

## Patentansprüche

1. Verfahren zur Temperaturregelung mindestens eines Massestroms in einer Füllmaschine (100) zur Wurstherstellung, wobei der Massestrom mehrere Bereiche der Füllmaschine (100) passiert, wobei
in den mehreren Bereichen der Füllmaschine (100) die Temperatur der Masse oder von der Masse durchströmte Bauteile gemessen wird,
**dadurch gekennzeichnet, dass**
die Temperatur der Masse in Abhängigkeit der gemessenen Temperaturen durch eine Heiz-/Kühleinrichtung (8) auf eine bestimmte Temperatur geregelt wird und
die Temperatur in einem bestimmten Bereich oder bestimmten Bereichen der Füllmaschine (100) gemessen wird und zur Temperaturregelung in einem anderen Bereich oder anderen Bereichen herangezogen wird.

2. Verfahren nach Anspruch 1,
**dadurch gekennzeichnet, dass**
die Temperatur zumindest in einem Bereich eines Fülltrichters (1) oder eines Ansaugbereichs (2, 16) und in oder nach einem Förderwerk (3) gemessen wird.

3. Verfahren nach mindestens einem der Ansprüche 1 oder 2,
**dadurch gekennzeichnet, dass**
die Temperatur in oder nach einem Fleischwolf (5), der nach dem Förderwerk (3) angeordnet ist, gemessen wird.

4. Verfahren nach mindestens einem der Ansprüche 1 bis 3,
**dadurch gekennzeichnet, dass**
die Temperatur der Masse in einem oder mehreren Bereichen der Füllmaschine (100) auf eine bestimmte Temperatur geregelt wird.

5. Verfahren nach Anspruch 4,
**dadurch gekennzeichnet, dass**
die Temperatur der Masse im oder am Trichter (1) und/oder am Förderwerk (3) und/oder an einem Fleischwolf (5) und/oder an dem Füllrohr (4) und/oder am oder im Ansaugbereich (2, 16) mit Hilfe der Heiz-/Kühleinrichtung (8) geregelt wird.

6. Verfahren nach mindestens einem der Ansprüche 1 bis 5,
**dadurch gekennzeichnet, dass**
die Temperatur der Masse in Abhängigkeit der in der Füllmaschine (100) gemessenen Temperatur bevor sie in die Füllmaschine geleitet wird, insbesondere bei der Zubereitung der pastösen Masse, eingestellt wird.

7. Verfahren nach mindestens Anspruch 4 und 5,
**dadurch gekennzeichnet, dass**
die Temperaturregelung in den einzelnen Bereichen durch einen gemeinsamen Heiz/Kühlkreis oder mindestens zwei getrennte Heiz-/Kühlkreise erfolgt.

8. Verfahren nach mindestens einem der Ansprüche 1 bis 7,
**dadurch gekennzeichnet, dass**
die Temperaturregelung vorausschauend in Abhängigkeit der zu erwartenden oder gemessenen Durchflussmenge der Masse erfolgt, wobei die Kühl- bzw. Heizleistung der Heiz-/Kühleinrichtung (8) in Abhängigkeit der Durchflussmenge geregelt wird.

9. Verfahren nach mindestens einem der Ansprüche 1 bis 7,
**dadurch gekennzeichnet, dass**
die Temperaturregelung vorausschauend in Abhängigkeit von dem zu erwartenden oder gemessenen Massedruck erfolgt, wobei die Kühl- bzw. Heizleistung der Heiz-/Kühleinrichtung in Abhängigkeit des Massedrucks geregelt wird.

10. Verfahren nach mindestens einem der Ansprüche 1 bis 7,
**dadurch gekennzeichnet, dass**
die Temperaturregelung vorausschauend in Abhängigkeit der zu erwartenden bzw. gemessenen Leistungsaufnahme der Füllmaschine erfolgt, wobei die Kühl- bzw. Heizleistung der Heiz-/Kühleinrichtung (8) in Abhängigkeit der zu erwartenden bzw. gemessenen Leistungsaufnahme geregelt wird.

11. Verfahren nach mindestens einem der Ansprüche 1, 4, 7 bis 10,
**dadurch gekennzeichnet, dass**
der Massestrom ein Koextrusionsmassestrom ist und die Temperatur in einem Bereich einer Koextrusionsmassezuführung (18) und/oder in einem Bereich eines Koextrusionsförderwerks (19) und/oder einem Bereich eines Koextrusionskopfes (17) gemessen wird.

12. Verfahren nach Anspruch 11,
**dadurch gekennzeichnet, dass**
die Temperatur der Masse an der Koextrusionsmassenzuführung (18) und/oder am Koextrusionsförderwerk (19) und/oder am Koextrusionskopf (17) über die Heiz-/Kühleinrichtung (8e) geregelt wird.

13. Verfahren nach mindestens einem der Ansprüche 1 bis 12,
**dadurch gekennzeichnet, dass**
die gemessenen Temperaturen zeit- und ortsabhängig dokumentiert werden.

14. Füllmaschine (100) zum Herstellen von Würsten aus mindestens einer pastösen Masse, die mehrere entsprechende Bereiche passiert, mit einem Ansaugbereich (2, 16), einem Fülltrichter (1), einem Förderwerk (3) sowie einem Füllrohr (4),
einen oder mehrere Temperatursensoren (7), die in unterschiedlichen Bereichen der Füllmaschine (100) angeordnet sind,
**gekennzeichnet, durch**
eine Heiz-/Kühleinrichtung (8) zum Heizen oder Kühlen der Masse, sowie
eine Regeleinrichtung (6), die die Temperatur der Masse in Abhängigkeit der gemessenen Temperaturen regelt, wobei der Temperatursensor oder die Temperatursensoren derart angeordnet sind, dass
die Temperatur in einem bestimmten Bereich oder bestimmten Bereichen der Füllmaschine (100) gemessen wird und die Regeleinrichtung derart ausgelegt ist, dass die gemessene Temperatur zur Temperaturregelung in einem anderen Bereich oder anderen Bereichen herangezogen wird.

15. Füllmaschine nach Anspruch 14,
**dadurch gekennzeichnet, dass**
die Heiz-/Kühleinrichtung (8) zumindest teilweise am oder im Fülltrichter (1) und/oder am Förderwerk (3) und/oder am Füllrohr (4) und/oder am Ansaugbereich (2,16)angeordnet ist.

16. Füllmaschine nach Anspruch 14 oder 15,
**dadurch gekennzeichnet, dass**
die Füllmaschine (100) weiter einen Fleischwolf (5) umfasst, und die Heiz-/Kühleinrichtung zumindest teilweise um den Fleischwolf angeordnet ist.

17. Füllmaschine nach mindestens einem der Ansprüche 14 bis 16,
**dadurch gekennzeichnet, dass**
die Temperatursensoren (7) zumindest in einem Bereich des Fülltrichters (1) oder des Ansaugbereichs und in oder nach dem Förderwerk (3) angeordnet sind.

18. Füllmaschine nach mindestens einem der Ansprüche 14 bis 17,
**dadurch gekennzeichnet, dass**
die Heiz-/Kühleinrichtung (8) die Füllmaschine (100) an einem oder mehreren Bereichen heizt oder kühlt und für diese Bereiche einen gemeinsamen Kühl- bzw. Heizkreis aufweist.

19. Füllmaschine nach mindestens einem der Ansprüche 14 bis 18,
**dadurch gekennzeichnet, dass**
die Heiz-/Kühleinrichtung (8) mehrere unabhängige Einheiten (8a, b, c) aufweist, mit getrennten Kühl- bzw. Heizkreisen.

20. Vorrichtung nach mindestens einem der Ansprüche 14, 18 oder 19,
**dadurch gekennzeichnet, dass**
die Vorrichtung weiter eine Koextrusionseinrichtung (21) umfasst, die mehrere Bereiche, wie eine Koextrusionsmassenzuführung (18), ein Förderwerk (19) sowie einen Koextrusionskopf (17) umfasst, wobei die Temperatursensoren (7f, g, h) in mehreren Bereichen der Koextrusionseinrichtung (21) angeordnet sind.

21. Vorrichtung nach Anspruch 20,
**dadurch gekennzeichnet, dass**
die Heiz-/Kühteinrichtung (8) an der Koextrusionsmassenzuführung (18) und/oder dem Koextrusionsförderwerk (19) und/oder dem Koextrusionskopf (17) angeordnet ist.

22. Vorrichtung nach mindestens einem der Ansprüche 14 bis 21,
**dadurch gekennzeichnet, dass**
die Füllmaschine eine Einrichtung (10) zum zeit- und ortsabhängigen Dokumentieren der gemessenen Temperaturen umfasst.

## Claims

1. Method for the temperature control of at least one mass flow in a filling machine (100) for the manufacture of sausages, wherein the mass flow passes through several sections of the filling machine (100), wherein
in the several sections of the filling machine (100) the temperature of the mass or of components through which the mass flows is measured,
**characterised in that**
the temperature of the mass is controlled by a heating / cooling device (8) to a certain temperature in dependence of the measured temperatures and
the temperature is measured in a certain section or certain sections of the filling machine (100) and is used for the temperature control in a different section or different sections.

2. Method according to Claim 1,
**characterised in that**
the temperature is at least measured in a section of a filling hopper (1) or of a suction intake section (2, 16) and in or after a conveying mechanism (3).

3. Method according to at least one of the Claims 1 or 2,
**characterised in that**
the temperature in or after a meat mincing machine (5), which is arranged after the conveying mechanism (3), is measured.

4. Method according to at least one of the Claims 1 to 3,
**characterised in that**
the temperature of the mass in one or several sections of the filling machine (100) is controlled to a certain temperature.

5. Method according to Claim 4,
**characterised in that**
the temperature of the mass in or at the hopper (1) and / or on the conveying mechanism (3) and / or at a meat mincing machine (5) and / or at the filling tube (4) and / or in or at the suction intake section (2, 16) is controlled with the aid of the heating / cooling device (8).

6. Method according to at least one of the Claims 1 to 5,
**characterised in that**
the temperature of the mass is set in dependence of the temperature measured in the filling machine (100) before it is passed into the filling machine, in particular with the preparation of the paste mass.

7. Method according to at least Claims 4 and 5,
**characterised in that**
the temperature control in the individual sections can occur through a common heating / cooling circuit or through at least two separate heating / cooling circuits.

8. Method according to at least one of the Claims 1 to 7,
**characterised in that**
the temperature control occurs predictively in dependence of the expected or measured mass flow rate, wherein the cooling or heating power from the heating / cooling device (8) is controlled depending on the flow rate.

9. Method according to at least one of the Claims 1 to 7,
**characterised in that**
the temperature control occurs predictively in dependence of the expected or measured mass pressure, wherein the cooling or heating power from the heating / cooling device is controlled depending on the mass pressure.

10. Method according to at least one of the Claims 1 to 7,
**characterised in that**
the temperature control occurs predictively in dependence of the expected or measured power consumption of the filling machine, wherein the cooling or heating power from the heating / cooling device (8) is controlled depending on the expected or measured power consumption.

11. Method according to at least one of the Claims 1, 4, 7 to 10,
**characterised in that**
the mass flow is a coextrusion mass flow and the temperature is measured in a section of a coextrusion mass intake (18) and / or in a section of a coextrusion conveying mechanism (19) and / or a section of a coextrusion head (17).

12. Method according to Claim 11,
**characterised in that**
the temperature of the mass at the coextrusion mass intake (18) and / or at the coextrusion conveying mechanism (19) and / or at the coextrusion head (17) is controlled via the heating / cooling device (8e).

13. Method according to at least one of the Claims 1 to 12,
**characterised in that**
the measured temperatures are documented with respect to time and location.

14. Filling machine (100) for the manufacture of sausages from at least one paste mass, which passes through several appropriate sections, with a suction intake section (2, 16), a filling hopper (1), a conveying mechanism (3) and a filling tube (4),
one or several temperature sensors (7), which are arranged in various sections of the filling machine (100),
**characterised by**
a heating / cooling device (8) for heating or cooling the mass, and
a control device (6), which controls the temperature of the mass in dependence of the measured temperatures, wherein the temperature sensor or the temperature sensors are arranged such that
the temperature is measured in a certain section or certain sections of the filling machine (100) and the control device is designed such that the measured temperature is used for the temperature control in a different section or different sections.

15. Filling machine according to Claim 14,
**characterised in that**
the heating / cooling device (8) is at least partially arranged at or in the filling hopper (1) and / or at the conveying mechanism (3) and / or at the filling tube (4) and / or at the suction intake section (2, 16).

16. Filling machine according to Claim 14 or 15,
**characterised in that**
the filling machine (100) also comprises a meat mincing machine (5), and the heating / cooling device is at least partially arranged around the meat mincing machine.

17. Filling machine according to at least one of the Claims 14 to 16,
**characterised in that**
the temperature sensors (7) are arranged at least in a section of the filling hopper (1) or of the suction intake section and in or after the conveying mechanism (3).

18. Filling machine according to at least one of the Claims 14 to 17,
**characterised in that**
the heating / cooling device (8) heats or cools the filling machine (100) at one or several sections and has a common cooling or heating circuit for these sections.

19. Filling machine according to at least one of the Claims 14 to 18,
**characterised in that**
the heating / cooling device (8) has several independent units (8a, b, c) with separate cooling or heating circuits.

20. Device according to at least one of the Claims 14, 18 or 19,
**characterised in that**
the device also comprises a coextrusion device (21), which comprises several sections, such as a coextrusion mass intake (18), a conveying mechanism (19) and a coextrusion head (17), wherein the temperature sensors (7f, g, h) are arranged in several sections of the coextrusion device (21).

21. Device according to Claim 20,
**characterised in that**
the heating / cooling device (8) is arranged at the coextrusion mass intake (18) and / or at the coextrusion conveying mechanism (19) and / or at the coextrusion head (17).

22. Device according to at least one of the Claims 14 to 21,
**characterised in that**
the filling machine comprises a device (10) for continuously documenting the measured temperatures with respect to time and location.

## Revendications

1. Procédé de régulation de température d'au moins un flux de matière dans une machine de remplissage (100) pour fabriquer des saucisses, le flux de matière passant dans plusieurs zones de la machine de remplissage (100), la température de la matière ou des éléments traversés par la matière étant mesurée dans la pluralité de zones de la machine de remplissage (100), **caractérisé en ce que** la température de la matière est réglée à une température déterminée par un dispositif de chauffage/refroidissement (8), en fonction des températures mesurées, et la température est mesurée dans une zone déterminée ou dans des zones déterminées de la machine de remplissage (100) et est utilisée pour la régulation de température dans une autre zone ou dans d'autres zones.

2. Procédé selon la revendication 1, **caractérisé en ce que** la température est mesurée au moins dans une zone d'une trémie de remplissage (1) ou d'une zone d'aspiration (2, 16) et dans ou après un mécanisme de transport (3).

3. Procédé selon au moins une des revendications 1 ou 2, **caractérisé en ce que** la température est mesurée dans ou après un hachoir (5) qui est disposé après le mécanisme de transport (3).

4. Procédé selon au moins une des revendications 1 à 3, **caractérisé en ce que** la température de la matière est réglée à une température déterminée dans une ou plusieurs zones de la machine de remplissage (100).

5. Procédé selon la revendication 4, **caractérisé en ce que** la température de la matière est régulée à l'aide du dispositif de chauffage/refroidissement (8), dans ou sur la trémie (1) et/ou sur le mécanisme de transport (3) et/ou sur un hachoir (5) et/ou sur le tube de remplissage (4) et/ou sur ou dans la zone d'aspiration (2, 16).

6. Procédé selon au moins une des revendications 1 à 5, **caractérisé en ce que** la température de la matière est réglée en fonction de la température mesurée dans la machine de remplissage (100), avant que la matière ne soit introduite dans la machine de remplissage, notamment lors de la préparation de la matière pâteuse.

7. Procédé selon au moins les revendications 4 et 5, **caractérisé en ce que** la régulation de température dans les différentes zones est réalisée par un circuit de chauffage/refroidissement commun ou par au moins deux circuits de chauffage/refroidissement distincts.

8. Procédé selon au moins une des revendications 1 à 7, **caractérisé en ce que** la régulation de température est effectuée de manière prédictive en fonction du débit de matière escompté ou mesuré, la puissance de refroidissement ou de chauffage du dispositif de chauffage/refroidissement (8) étant régulée en fonction du débit.

9. Procédé selon au moins une des revendications 1 à 7, **caractérisé en ce que** la régulation de température est effectuée de manière prédictive en fonction de la pression escomptée ou mesurée de la matière, la puissance de refroidissement ou de chauffage du dispositif de chauffage/refroidissement étant régulée en fonction de la pression de matière.

10. Procédé selon au moins une des revendications 1 à 7, **caractérisé en ce que** la régulation de température est effectuée de manière prédictive en fonction de la puissance absorbée escomptée ou mesurée de la machine de remplissage, la puissance de refroidissement ou de chauffage du dispositif de chauffage/refroidissement (8) étant régulée en fonction de la puissance absorbée escomptée ou mesurée.

11. Procédé selon au moins une des revendications 1, 4, 7 à 10, **caractérisé en ce que** le flux de matière est un flux de matière de coextrusion et la température est mesurée dans une zone d'un moyen d'alimentation en matière de coextrusion (18) et/ou dans une zone d'un mécanisme de transport de coextrusion (19) et/ou dans une zone d'une tête de coextrusion (17).

12. Procédé selon la revendication 11, **caractérisé en ce que** la température de la matière est réglée sur le moyen d'alimentation en matière de coextrusion (18) et/ou sur le mécanisme de transport de coextrusion (19) et/ou sur la tête de coextrusion (17), par l'intermédiaire du dispositif de chauffage/refroidissement (8e).

13. Procédé selon au moins une des revendications 1 à 12, **caractérisé en ce que** les températures mesurées sont documentées en fonction du temps et du lieu.

14. Machine de remplissage (100) destinée à fabriquer des saucisses à partir d'au moins une matière pâteuse qui passe dans plusieurs zones correspondantes, comprenant une zone d'aspiration (2, 16), une trémie de remplissage (1), un mécanisme de transport (3) ainsi qu'un tube de remplissage (4) et un ou plusieurs capteurs de température (7) qui sont disposés dans différentes zones de la machine de remplissage (100), **caractérisée en ce qu'**elle comporte un dispositif de chauffage/refroidissement (8), destiné à chauffer ou refroidir la matière, ainsi qu'un dispositif de régulation (6) qui régule la température de la matière en fonction des températures mesurées, le ou les capteur(s) de température étant installé(s) de manière à ce que la température soit mesurée dans une zone déterminée ou dans des zones déterminées de la machine de remplissage (100), et le dispositif de régulation étant conçu de manière à ce que la température mesurée soit utilisée pour réguler la température dans une autre zone ou dans d'autres zones.

15. Machine de remplissage selon la revendication 14, **caractérisée en ce que** le dispositif de chauffage/refroidissement (8) est installé au moins en partie sur ou dans la trémie de remplissage (1) et/ou sur le mécanisme de transport (3) et/ou sur le tube de remplissage (4) et/ou sur la zone d'aspiration (2, 16).

16. Machine de remplissage selon la revendication 14 ou 15, **caractérisée en ce que** la machine de remplissage (100) comprend en outre un hachoir (5) et le dispositif de chauffage/refroidissement est installé au moins en partie autour du hachoir.

17. Machine de remplissage selon au moins une des revendications 14 à 16, **caractérisée en ce que** les capteurs de température (7) sont disposés au moins dans la zone de la trémie de remplissage (1) ou la zone d'aspiration et dans ou après le mécanisme de transport (3).

18. Machine de remplissage selon au moins une des revendications 14 à 17, **caractérisée en ce que** le dispositif de chauffage/refroidissement (8) chauffe ou refroidit la machine de remplissage (100) dans une ou plusieurs zones et présente un circuit de refroidissement et de chauffage commun pour ces zones.

19. Machine de remplissage selon au moins une des revendications 14 à 18, **caractérisée en ce que** le dispositif de chauffage/refroidissement (8) présente plusieurs unités (8a, b, c) autonomes, comportant des circuits de refroidissement et de chauffage distincts.

20. Installation selon au moins une des revendications 14, 18 ou 19, **caractérisée en ce que** l'installation comprend en outre un dispositif de coextrusion (21) qui comporte plusieurs zones, à savoir un moyen d'alimentation en matière de coextrusion (18), un mécanisme de transport (19) et une tête de coextrusion (17), les capteurs de température (7f, g, h) étant installés dans plusieurs zones du dispositif de coextrusion (21).

21. Installation selon la revendication 20, **caractérisée en ce que** le dispositif de chauffage/refroidissement (8) est installé sur le moyen d'alimentation en matière de coextrusion (18) et/ou le mécanisme de transport de coextrusion (19) et/ou la tête de coextrusion (17).

22. Installation selon au moins une des revendications 14 à 21, **caractérisée en ce que** la machine de remplissage comprend un dispositif (10) de documentation des températures mesurées, en fonction du temps et du lieu.
